# EUROPÄISCHE PATENTSCHRIFT

(11) **EP 2 272 319 B1**
(45) Veröffentlichungstag und Bekanntmachung des Hinweises auf die Patenterteilung: **08.02.2012**
(21) Anmeldenummer: 10006751.1
(22) Anmeldetag: 30.06.2010
(51) Int. Cl.: A01D 85/00, A01F 15/14

(54) **Großballenpresse**
Large baling press
Presse de formage en grandes balles

(30) Priorität: 10.07.2009 DE 102009032800
(43) Veröffentlichungstag der Anmeldung: 12.01.2011
(73) Patentinhaber: Maschinenfabrik Bernard Krone GmbH, 48480 Spelle (DE)
(72) Erfinder: Horstmann, Josef, Dr.-Ing., 49479 Ibbenbüren (DE); Martensen, Klaus, Dr.-Ing., 48477 Hörstel (DE)

(56) Entgegenhaltungen:
- EP-A1- 0 429 798
- EP-A2- 0 880 886
- DE-A1- 19 520 751

## Beschreibung

Die Erfindung betrifft eine Großballenpresse zur Herstellung quaderförmiger Hochdruckballen, insbesondere landwirtschaftliche Erntegutballen, gemäß dem Oberbegriff des Anspruchs 1. Derartige Großballenpressen sind in verschiedenen Ausführungsformen, Größen und Antriebsvarianten bekannt. Am Markt durchgesetzt haben sich bisher jedoch fast ausschließlich an ein Zugfahrzeug anhängbare und von diesem mechanisch antreibbare Pressen, bei denen der gepresste Ballen für einen dauerhaften Zusammenhalt vorzugsweise mit mehreren Bindegamsträngen umbunden wird, welche vor dem Auswurf des Ballens mittels einer Bindeeinrichtung verknotet werden.

Quaderförmige Hochdruckballen zeichnen sich gegenüber Rundballen durch die hohe gleichmäßige Festigkeit und durch die Form des Ballens aus, wodurch unter anderem besonders gute Transport- und Lagerverhältnisse gegeben sind. Insbesondere in jüngster Zeit, in der Stroh als Rohstoff bzw. Energieträger immer mehr zur Handelsware wird und oft über große Entfernungen transportiert werden muss, haben sich die Anforderungen an Großballenpressen stark verändert. Die Wirtschaftlichkeit der Halmfutterbergung und der Gewinn aus dem Handel mit Stroh sind stark abhängig von den Berge-, Fracht- und Einlagerungskosten. Genau hieraus ergeben sich besondere Forderungen an die Pressentechnik. Höchste Tonnage auf kleinstem Raum und besonders haltbare und formstabile Großballen, auch bei sehr kurzem geschnittenem oder gar gehäckseltem Erntegut werden erwartet.

Das Handling derartig großer und schwerer Ballen stellt durch den mittlerweile üblichen Einsatz professioneller Bergetechnik, wie beispielsweise Radlader oder Teleskoplader keine Grenzen dar. Bei der Herstellung derartig hochverdichteter und großformatiger Ballen hingegen, stößt man bezüglich der Antriebsleistung und insbesondere bezüglich der zu beherrschenden Kräfte innerhalb der Großballenpressen in bisher nicht erreichte Dimensionen vor. Zur Lösung eines daraus resultierenden Problems, wird in der Offenlegungsschrift DE 10 2007 015 649 A1 beispielsweise eine Großballenpresse zur Herstellung extrem hochverdichteter Ballen beschrieben, welche zur Schonung des antreibenden Traktors mit einer zusätzlichen hydraulischen Anlaufhilfe zur Unterstützung des Maschinenanlaufs ausgestattet ist.

Eine andere Grenze, an die man bei der Herstellung extrem hochverdichteter Pressballen stößt, ist die Bindung des Ballens für dessen dauerhaften sicheren Zusammenhalt. Insbesondere aus dem Bereich der stationären Industrie-Ballenpressen für diverse Materialien sind Veröffentlichungen und Versuche bekannt, bei denen mit anderen Bindemitteln, wie Kunststoff oder Stahlbändern und mit alternativen Verbindungsarten der Bindemittel wie beispielsweise Kleben, Verschweißen oder die Verwendung von zusätzlichen Verbindern eine höhere Festigkeit erzielt werden soll. Im Bereich der Großballenpressen für landwirtschaftliche Erntegüter hat sich jedoch keine der Lösungen gegenüber dem Verknoten von Bindegam durchsetzen können. Die hohe Wirtschaftlichkeit durch verhältnismäßig geringe Bindemittelkosten und kurze Prozesszeiten und die Prozesssicherheit des Verknotvorgangs unter den besonderen Bedingungen einer mobilen Erntemaschine einerseits und die Unbedenklichkeit der Garnbindung bezüglich Gefährdung der Tiergesundheit und der Umwelt andererseits sprechen für das Verfahren.

Aus der EP 0 429 798 A1 ist ein Großpressballen, insbesondere für Heu und/oder Stroh bekannt geworden, dessen Herstellung dadurch herbeigeführt wird, dass eine Anzahl mit Schnüren vorgebundene Kleinpressballen in einer Reihe aneinander gestellt sind und durch mehrere verknotete Außenschnüre fest umfasst sind. Derartig hergestellte Großpressballen bieten den Vorteil des rationellen Einbringens vom Feld in dafür vorgesehene Lagerstätten verbunden mit einer handlichen Verteilung im Stall, wenn die Außenschnüre dann wieder aufgetrennt werden. Maßnahmen zur Erhöhung der Ballenfestigkeit dagegen gehen aus der EP 0 429 798 A1 nicht hervor.

Weiterhin kennt der Stand der Technik durch die DE 195 20 751 A1 und die EP 0 880 886 A2 Vorrichtungen zur Herstellung von sogenannten Quaderballen durch das Aneinanderreihen von Klein- oder Standardballen. Diese auch als Großpackenpressen bezeichneten Maschinen umgeben die vorgebundenen Klein- oder Standardballen mit weiteren Schnüren und bilden dadurch große, nur noch mit maschineller Hebe- und Bergetechnik beherrschbare Einheiten. Hinweise zur Steigerung der Ballenfestigkeit sind auch diesen Schriften nicht entnehmbar.

Somit stellt sich die Aufgabe der Erfindung, eine Großballenpresse zur Herstellung quaderförmiger Hochdruckballen, insbesondere landwirtschaftliche Erntegutballen derart zu verbessern, dass auch bei extremer Erhöhung der Presskräfte und damit der Ballenfestigkeit und bei kurzem Pressgut ein dauerhafter und formstabiler Zusammenhalt der Ballen gewährleistet ist.

Diese Aufgabe wird erfindungsgemäß durch die Merkmale des Anspruchs 1 gelöst. In den weiteren Ansprüchen schließen sich vorteilhafte Weiterbildungen der Erfindung an. Gemäß der Erfindung wird eine Großballenpresse bereitgestellt, bei der die bisher übliche Anzahl von Bindemittelsträngen unter Beachtung der erfindungsgemäßen Merkmale um zumindest einen weiteren Bindemittelstrang ergänzt worden ist. Bei einer Großballenpresse mit einer Gambindeeinrichtung bedeutet das, dass den vorhandenen allgemein bekannten Knüpfern zumindest ein weiterer hinzugefügt wird und somit die Beanspruchung des einzelnen Garnstranges und insbesondere der Schwachstelle Knoten geringer wird. Da vorteilhafterweise die Knüpfer der Bindeeinrichtung auf einer gemeinsamen Antriebswelle nebeneinander angeordnet sind, ist die minimale Breite eines Knüpfers auch der begrenzende Faktor für den minimalen Abstand der Garnstränge. Eine Anordnung der Knüpfapparate auf zumindest zwei versetzt zueinander angeordneten Antriebswellen zur weiteren Verringerung der Garnabstände ist theoretisch zwar denkbar, aber in der Praxis nur mit einem kaum vertretbaren technischen Aufwand realisierbar.

Durch verschiedene konstruktive Änderungen der bisher verwendeten, allgemein bekannten Knüpfapparate ist jedoch eine Reduzierung des Mindestabstandes möglich. Überlegungen und Versuche haben aber noch einen weiteren begrenzenden Faktor für die maximale Anzahl von Bindemittelsträngen bei der Herstellung von quaderförmigen Großballen ergeben. Um bei allen üblichen Verfahren des Ballenhandlings einen sicheren Halt der äußeren Bindungsstränge zu gewährleisten, ist die Einhaltung eines Mindestabstandes der äußeren Bindungsstränge zu den parallel dazu verlaufenden Ballenlängsseiten sehr wichtig.

Bei zu geringem Abstand ist ein Abrutschen des Bindungsstranges sehr schnell möglich, beispielsweise bei nicht optimaler Ausformung der Ballenkanten oder bei dem Ballenhandling von der Ablage auf dem Feld bis zur Verbrauchsstelle.

Auf diesen Erkenntnissen ruhen die erfindungsgemäßen Merkmale, welche den Abstand der zu den Außenlängskanten des Ballens nächstliegenden Bindungsstränge in ein Verhältnis zu den Abständen der Bindungsstränge untereinander setzen. Da die Abstände der Bindungsstränge untereinander nicht zwangsläufig genau gleich sein müssen, wird hier der mittlere Abstand angenommen.

Somit wird durch die Erfindung eine wesentlich verbesserte Großballenpresse bereitgestellt, die mit geringem Mehraufwand eine wesentlich wirtschaftlichere Erntegutbergung durch die Herstellung, bezüglich Erntegutdichte und Formstabilität optimierter Erntegutballen möglich macht.

Weitere Vorteile und Einzelheiten der Erfindung ergeben sich aus den Unteransprüchen und einem in der Zeichnung dargestellten Ausführungsbeispiel, das im Folgenden beschrieben wird.

In der Zeichnung zeigt:
**Fig. 1**: eine schematische Gesamtseitenansicht einer Großballenpresse zur Herstellung quaderförmiger Hochdruckballen ;
**Fig. 2**: eine perspektivische Ansicht eines, mit einer erfindungsgemäßen Großballenpresse hergestellten Hochdruckballens.

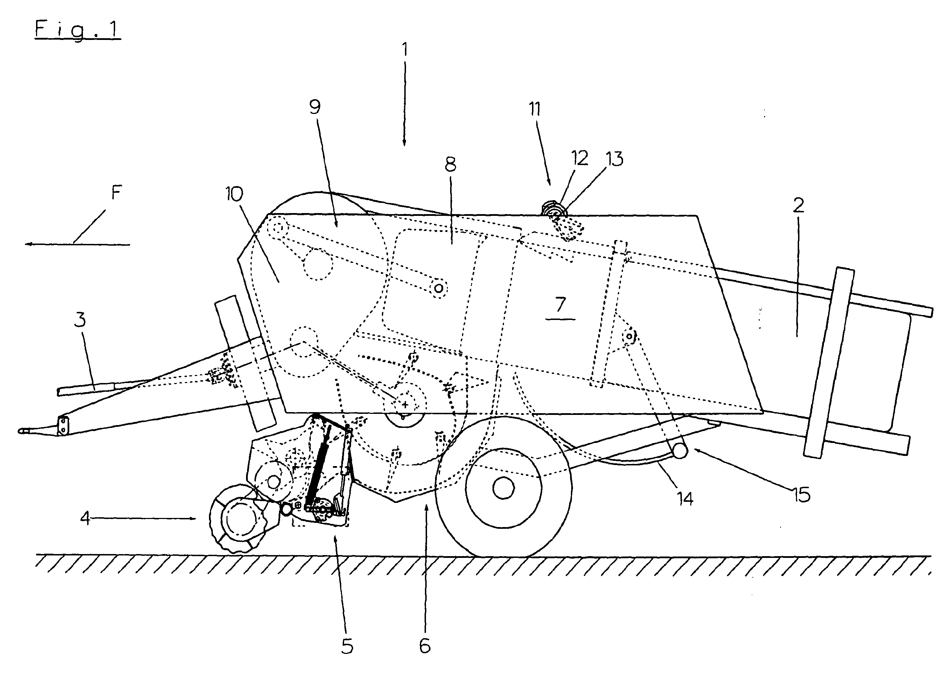

Fig. 1 zeigt eine landwirtschaftliche Großballenpresse 1 zur Erzeugung quaderförmiger Pressballen 2 aus landwirtschaftlichem Erntegut, welche von einem nicht dargestellten landwirtschaftlichen Ackerschlepper oder dergleichen Zugmaschine gezogen und über eine Gelenkwelle 3 angetrieben wird. Die Ballenpresse 1 verfügt in ihrem vorderen Bereich über eine Aufsammelvorrichtung 4 zur Aufnahme des Erntegutes vom Erdboden. Nachfolgende Schneid- 5 und Förderaggregate 6 führen das bearbeitete Erntegut einem Presskanal 7 zu. Im Presskanal 7 ist ein Presskolben 8 hin- und herbeweglich angeordnet, wobei der Antrieb von einem Kurbeltrieb 9 eines Hauptgetriebes 10 erfolgt. Eine hin- und hergehende Bewegung des Presskolbens 8 im Presskanal 7 wird als Presskolbenhub bezeichnet. Bei Vollauslastung der Maschine wird vor jedem Presskolbenhub ein vorverdichtetes Paket aus Erntegut von der Fördereinrichtung 6 in den Presskanal 7 gefördert und durch den entgegen der Fahrtrichtung F bewegten Presskolben 8 nach hinten geschoben und verdichtet. Oberhalb des Presskanals 7 befindet sich eine Bindeeinrichtung 11, welche aus mehreren in einer Reihe nebeneinander angeordneten Knüpfern 12 besteht. Die Knüpfer 12 sind dabei auf einer gemeinsamen, horizontal und quer zum Presskanal 7 ausgerichteten Knüpferwelle 13 gelagert, über die sie auch gemeinsam angetrieben werden.

Unterhalb des Presskanals 7 ist für jeden Knüpfer 12 eine Nadel 14 vorgesehen, die der Zuführung des Bindemittels beim Beginn des Bindevorganges zu den Knüpfern 12 dient. Die Nadeln 14 sind an einem gemeinsamen Nadelrahmen 15 gehaltert und stehen für die Sicherstellung der notwendigen Synchronisation der Abläufe in einer Antriebsverbindung zur Knüpferwelle 13.

Bei der Bindungsart, mittels derer die Bindegarnstränge um den fertig gestellten Ballen 2 von den Knüpfern 12 zu Endlosschlaufen verbunden werden, um so den Ballen 2 dauerhaft in seinem hochverdichtetem Zustand zu erhalten, unterscheidet man zwei grundsätzliche Systeme. Das Einfachknotensystem und das Doppelknotensystem. Beim Einfachknotensystem werden das Bindemittel und die Knüpfer mit zunehmenden Ballenabmessungen und Verdichtungen von Pressballen während des Pressvorgangs auch zunehmend belastet und beansprucht, wobei Grenzen der Haltbarkeit erreicht werden. Daraus resultierend wurde speziell zur Erhöhung der Bindesicherheit von großen hochfesten Ballen das Doppelknotensystem entwickelt. Kennzeichen dieser Bindeart ist, dass das den gepressten Ballen umschlingende Bindegarn anstelle mit einem Knoten, mit zwei Knoten verknüpft wird. Während des Pressvorganges werden dem Ballen ein oberer und ein unterer Bindegarnfaden zugeführt. Beide Fäden werden jeweils am Anfang und am Ende des jeweiligen Ballens an dessen Oberseite verknotet. Bei Großballenpressen für quaderförmige hochverdichtete Erntegutballen wie die in Fig. 1 dargestellte des Ausführungsbeispiels, hat sich dieses System durchgesetzt und ist weit verbreitet. Da die kennzeichnenden Merkmale der Erfindung jedoch unabhängig vom Bindesystem der Großballenpresse sind, wird hier darauf nicht weiter eingegangen.

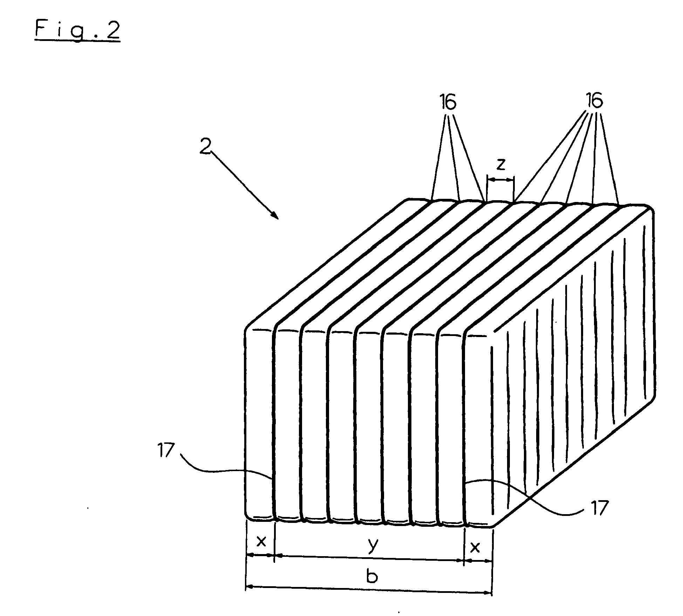

Wie bereits eingangs beschrieben, haben sich aufgrund gestellter Erfordernisse unter anderem gewisse standardisierte Ballengrößen entwickelt. So weisen die mit der erfindungsgemäßen Großballenpresse 1 der Fig. 1 gefertigten Ballen 2 der Fig. 2 beispielsweise die weit verbreitete Ballenbreite b von 1200 mm auf. Bisher sind nur Ballenpressen bekannt, die bei dieser Ballenbreite maximal sechs Knüpfer 12 aufweisen und somit die Ballen mit maximal sechs Bindemittelsträngen 16 umbinden.

Der mit der erfindungsgemäßen Großballenpresse 1 gefertigte Ballen 2 der Fig. 2 weist nun erfindungsgemäß erstmals mehr als sechs, nämlich sogar acht Bindemittelstränge 16 auf. Durch das vorteilhafte Hinzufügen von zumindest einem weiteren Bindemittelstrang 16 bei der Bindung des Ballen 2 werden zum einen noch höhere Ballenverdichtungen ermöglicht und zum anderen wird dadurch der dauerhafte Zusammenhalt des Ballens sicherer gewährleistet, wenn bei bisherigen Bindungen die Haltbarkeitsgrenzen der Garnstränge 16 und insbesondere der Knoten bereits erreicht waren. Versuche, diese Vorteile beispielsweise durch die Verwendung hochwertigerer oder dickerer Bindemittel zu erreichen, führten nicht zum gewünschten Erfolg. Die technischen und wirtschaftlichen Nachteile, die diese Lösungen mit sich brachten, überwiegten.

Die Aufteilung der Garnstränge 16 über die Ballenbreite b ist im Stand der Technik durch zwei Vorgaben bestimmt. Um einen sauber geformten Ballen zu erhalten, der nach dem Verlassen des Presskanals der Ballenpresse insbesondere an den Außenkanten nicht wieder übermäßig expandiert und seine Maßhaltigkeit verliert, dürfen die äußeren Bindegarnstränge 17, welche in Längsrichtung des Ballens parallel zu den Ballenaußenkanten verlaufen, nicht zu weit von diesen entfernt sein. Damit ergibt sich zwischen den beiden äußeren Bindemittelsträngen 17 ein Bereich y der mit einer Anzahl an Bindemittelsträngen versehen werden kann, die sich aus der Breite der Knüpfer ergibt, die vorteilhaft nebeneinander auf einer Knüpferwelle angeordnet sind. Somit ergab sich bisher bei einer Ballenbreite b von 1200 mm die Anzahl von sechs Bindemittelsträngen 16.

Durch die erfindungsgemäße Verwendung von modifizierten Knüpfern schmalerer Bauart und diversen dadurch notwendigen Anpassungen an der Großballenpresse ist es gelungen, eine Großballenpresse bereitzustellen, die Ballen 2 mit wesentlich verbesserten Eigenschaften herstellt. Insbesondere durch die Einhaltung der äußeren Garnstrangabstände x, welche zu den Abständen z der Garnstränge 16 zueinander erfindungsgemäß in dem vorteilhaften Verhältnis , x ist gleich oder größer als z, liegen, ist es nunmehr möglich, durch das Hinzufügen von zumindest einem zusätzlichen Bindemittelstrang 16 den Anforderungen des Marktes nach immer höher verdichteten, dauerhaft formstabilen Ballen eine Lösung zu bieten.

Unter Beachtung der zuvor genannten Verhältnisgleichung ist es mit der Großballenpresse des Ausführungsbeispiels somit möglich, einen Ballen 2 mit einer Breite b von 1200 mm mit acht Bindemittelsträngen 16 zu versehen, wobei keine Gefahr besteht, dass die äußeren Stränge 17 aufgrund eines zu geringen Abstandes x vom Ballen 2 abrutschen. In Fig. 2 lässt sich gut erkennen, wie der Abstand z eines äußeren Garnstranges 17, diesen in seinem Halt derart beeinflusst, dass davon der äußere Abstand x ebenfalls beeinflusst wird. Je dichter der nächstliegende Garnstrang 16 zum äußeren Garnstrang17 angeordnet ist, desto kleiner kann auch der Abstand x zur Ballenaußenkante ausgeführt werden. Diese Erkenntnis und die daraus erstellte Gleichung gelten selbstverständlich gleichwirkend für beliebige Ballenabmessungen.

## Patentansprüche

1. Großballenpresse (1) zur Herstellung quaderförmiger Hochdruckballen, insbesondere landwirtschaftlicher Erntegutballen, welche als selbstfahrende oder als an eine Zugmaschine angehängte und angetriebene Erntemaschine das Erntegut mittels Aufnahme- und Fördereinrichtungen (4, 5, 6) aufnimmt und einem Presskanal (7) zuführt, in dem das Erntegut zu hochverdichteten Ballen (2) geformt wird, wobei die Ballen (2) für einen dauerhaften Zusammenhalt mittels einer Bindeeinrichtung (11) mit mehreren Bindemittelsträngen (16) in Längsrichtung der Ballen (2) umspannt werden, welche zur Fertigstellung der Ballen (2) jeweils durch die Bindeeinrichtung (11) zu Endlosschlaufen verbunden werden, **dadurch gekennzeichnet, dass** die Bindeeinrichtung (11) bei einer Ballenbreite (b) von etwa 800 mm zumindest fünf Knüpfapparate (12) aufweist, so dass die mit der Großballenpresse (1) produzierten Erntegutballen (2) zumindest fünf Bindemittelstränge (16) aufweisen, oder dass die Bindeeinrichtung (11) bei einer Ballenbreite (b) von etwa 1200 mm zumindest sieben Knüpfapparate (12) aufweist, so dass die mit der Großballenpresse (1) produzierten Erntegutballen (2) zumindest sieben Bindemittelstränge (16) aufweisen, wobei die Knüpfapparate (12) derart angeordnet sind, dass die Abstände (x) der äußeren Bindemittelstränge (17) zur jeweils nächstliegenden, äußeren, parallelen Ballenlängskante zumindest gleich oder größer als der durchschnittliche Abstand (z) benachbarter Bindemittelstränge (16) zueinander sind.

2. Großballenpresse (1) zur Herstellung quaderförmiger Hochdruckballen nach Anspruch 1, **dadurch gekennzeichnet, dass** die Bindeeinrichtung (11) die vorzugsweise aus Bindegam bestehenden Bindemittelstränge (16) mittels Verknotung zu Endlosschlaufen verbindet.

3. Großballenpresse (1) zur Herstellung quaderförmiger Hochdruckballen nach zumindest einem der vorhergehenden Ansprüche, **dadurch gekennzeichnet, dass** alle Knüpfapparate (12) der Bindeeinrichtung (11) auf einer quer zur Ballenlängsrichtung ausgerichteten Welle (13) angeordnet sind.

4. Großballenpresse (1) zur Herstellung quaderförmiger Hochdruckballen nach zumindest einem der vorhergehenden Ansprüche, **dadurch gekennzeichnet, dass** die Knüpfapparate (12) für die äußeren Bindemittelstränge (17) derart angeordnet sind, dass die Abstände der äußeren Bindemittelstränge (17) zur jeweils nächstliegenden äußeren parallelen Ballenlängskante im Bereich von 120 mm bis 160 mm liegen.

## Claims

1. Large-bale baling press (1) for producing cuboid high-compression bales, and in particular bales of harvested agricultural crops, which, in the form of a self-propelled harvester or one hitched to and driven from a prime mover, picks up the harvested crop by means of pick-up and feeding arrangements (4, 5, 6) and feeds it to a pressing passage (7) in which the harvested crop is shaped into highly compressed bales (2), the bales (2), for long-lasting cohesion, having tensioned round them by means of a binding arrangement (11) a plurality of lengths (16) of binding medium in the longitudinal direction of the bales (2), which lengths (16) of binding medium are connected into endless loops by the binding arrangement (11) to complete the bales (2), **characterised in that**, for a bale width (b) of approximately 800 mm, the binding arrangement (11) has at least five knotting assemblies (12) and the bales (2) of harvested crop produced by the large-bale baling press (1) thus have at least five lengths (16) of binding medium, or **in that**, for a bale width (b) of approximately 1200 mm, the binding arrangement (11) has at least seven knotting assemblies (12) and the bales (2) of harvested crop produced by the large-bale baling press (1) thus have at least seven lengths (16) of binding medium, the knotting assemblies (12) being so arranged that the distances (x) between the outer lengths (17) of binding medium and the respective outer, parallel, longitudinal edges of the bale which are closest to them are at least equal to or greater than the average distance (z) between lengths (16) of binding medium which are adjacent to one another.

2. Large-bale baling press (1) for producing cuboid high-compression bales, according to claim 1, **characterised in that** the binding arrangement (11) connects the lengths (16) of binding medium, which preferably comprise binding twine, by knotting them into endless loops.

3. Large-bale baling press (1) for producing cuboid high-compression bales, according to at least one of the preceding claims, **characterised in that** all the knotting assemblies (12) of the binding arrangement (11) are arranged on a shaft (13) aligned transversely to the longitudinal direction of the bales.

4. Large-bale baling press (1) for producing cuboid high-compression bales, according to at least one of the preceding claims, **characterised in that** the knotting assemblies (12) for the outer lengths (17) of binding medium are so arranged that the distances between the outer lengths (17) of binding medium and the respective outer, parallel, longitudinal edges of the bale which are closest to them are in the range from 120 to 160 mm.

## Revendications

1. Presse à balles de grandes dimensions (1) pour réaliser des balles parallélépipédiques, fortement comprimées, notamment des balles de produits agricoles, presse qui, en tant que machine automotrice ou machine remorquée par un tracteur et une machine de récolte entraînée, prend le produit de récolte par des installations de collecte et de transfert (4, 5, 6) pour alimenter un canal de presse (7) dans lequel le produit de récolte est mis sous la forme de balles (2) fortement comprimées,
* les balles (2) étant entourées par plusieurs cordons de liaison (16) dans la direction longitudinale des balles (2) pour assurer le maintien permanent réalisé à l'aide d'une installation de nouage (11), les cordons de liaison étant reliés en boucle sans fin par l'installation de nouage (11) pour terminer les balles (2),
presse **caractérisée en ce que**
* pour une largeur de balle (b) d'environ 800 mm, l'installation de nouage (11) comporte au moins cinq noueurs (12) pour que les balles terminées (2) produites par la presse à balles de grandes dimensions (1) comportent au moins cinq cordons de liaison (16), ou
* pour une largeur de balle (b) d'environ 1200 mm, l'installation de nouage (11) comporte au moins sept noueurs (12) pour que les balles produites (2) par la presse à balles de grandes dimensions (1) comportent au moins sept cordons de liaison (16),
* les noueurs (12) étant répartis pour que l'intervalle (x) des cordons de liaison extérieurs (17) par rapport au bord longitudinal de balle, parallèle, extérieur, le plus proche, soit égal ou supérieur à la distance moyenne (z) entre des cordons de liaison (16) voisins.

2. Presse à balles de grandes dimensions (1) pour réaliser des balles parallélépipédiques, très comprimées, selon la revendication 1,
**caractérisée en ce que**
l'installation de nouage (11) relie les cordons de liaison (16) constitués de préférence de fils de liaison en les nouant pour former des boucles sans fin.

3. Presse à balles de grandes dimensions (1) pour réaliser des balles parallélépipédiques, fortement comprimées, selon au moins l'une des revendications précédentes,
**caractérisée en ce que**
tous les noueurs (12) de l'installation de nouage (11) sont installés sur un arbre (13) dirigé transversalement à la direction longitudinale des balles.

4. Presse à balles de grandes dimensions (1) pour réaliser des balles parallélépipédiques, très comprimées, selon au moins l'une des revendications précédentes,
**caractérisée en ce que**
les noueurs (12) pour les cordons de liaison extérieurs (17) sont installés pour que la distance entre les cordons de liaison extérieurs (17) par rapport au bord longitudinal de la balle, parallèle, extérieur le plus proche, soit dans une plage comprise entre 120 mm et 160 mm.
